# EUROPEAN PATENT SPECIFICATION

(11) **EP 1 674 231 B1**
(45) Date of publication and mention of the grant of the patent: **13.01.2010**
(21) Application number: 05112509.4
(22) Date of filing: 20.12.2005
(51) Int. Cl.: B29C 45/02, B29C 45/27

(54) **Improved system for forming products from elastomeric material**
Verbessertes System zum Formen von Produkten aus elastomerem Material
Système amélioré pour former des produits en matière élastomère

(30) Priority: 23.12.2004 IT MI20042480
(43) Date of publication of application: 28.06.2006
(73) Proprietor: Gitis S.r.L., 25031 Capriolo BS (IT)
(72) Inventor: Parzani, Dr. Luigi, 24067, SARNICO (Bergamo) (IT)
(74) Representative: Ripamonti, Enrico

(56) References cited:
- DE-A1- 2 401 009
- GB-A- 1 352 348
- GB-A- 1 511 847
- GB-A- 2 218 372
- US-A- 3 590 114
- US-A- 3 843 295
- US-A- 3 973 892
- US-A- 5 200 208

## Description

The present invention relates to a mould in accordance with the introduction to the main claim.

A moulding system for forming products from elastomeric material, such as rubber or the like, is known to generally comprise a buffer unit or feed chamber having a substantially parallelepiped body of small thickness and comprising two opposing surfaces. The elastomeric material reaches this body in plastic form from a charging member or tank.

In these known systems, at least one nozzle (but usually a plurality of nozzles) fixed to and projecting from at least one of said opposing surfaces enables said material to be transferred to a platen or mould comprising a parallelepiped body, usually defined by two removably coupled elements, disposed in front of said surface and presenting at least one impression (but normally a plurality) corresponding to the product to be obtained. This impression is usually internal to said platen (for example defined between its removable elements) and has the shape of the product to be obtained. Presser means are provided to bring said buffer unit into relative contact with said platen or mould and enable said nozzle to be coupled to a surface seat of this latter connected to said impression by a suitable conduit, to enable the material in plastic form to be transferred into it to obtain the required product after suitable thermal treatment (for example vulcanization). The thermal treatment, for example vulcanization, is achieved in particular by disposing a temperature-controlled plate on said impression-carrying platen.

In known systems, the material in plastic form (also known hereinafter as plastic material) is injected into the impression-carrying platen at a pressure which is exerted directly on the material, already fed into the buffer unit, by the actual impression-carrying platen in contact with the buffer unit provided with nozzles, by a force exerted by suitable thrust means. This material is hence urged through each fixed nozzle, passes into the impression-carrying platen and reaches this latter. The impression-carrying platen is then withdrawn from the buffer unit to enable the temperature-controlled plate to be disposed between the two and in contact with both to close each nozzle and heat the material in each impression in order to vulcanize it.

This known solution presents various drawbacks. Firstly, the said manner of urging the plastic material though the fixed nozzles of the buffer unit requires a high pressure to be generated in the buffer unit because of the usually large surface area of the material present therein. This requires an adequate presser structure, able to generate such a high pressure.

In addition, as the plastic material is forced outwards through the nozzles by a pressure exerted directly on it by presser means rigidly fixed to a structure of the system, such a system is complicated to maintain because its sensitive part (i.e. its buffer unit) is necessarily always within its interior, or close to a region which is always at high temperature (the mould). Consequently before commencing maintenance, the system must be allowed to cool down, this requiring considerable time. This time also comes into play if having to work on the system for problems arising within the buffer unit.

US-A-3843295 describes an injection molding machine with adjustable nozzle length means which forms the preamble of the new main claim.

US 5 200 208 relates to a multi-station rubber injection molding machine including plural molding stations for respective molds, a rubber injection unit, and a manifold assembly for selectively transferring uncured rubber from the rubber injection unit to a mold in any one of the molding stations. It is described that the manifold assembly includes an inlet for receiving molding material from the injection unit and a plurality of nozzle members movable into and out of operative engagement with a mold in the respective molding station.

GB 1511847 relates to a mould suitable for obtaining hollow molded rubber articles, said mould having mould plates carrying a plurality of injection nozzles which are fixed to the corresponding plates.

An object of the present invention is to provide a moulding system for moulded articles which is improved compared with known systems.

Another object is to provide a system enabling quick maintenance, and hence favouring productivity.

Another object is to provide a system enabling high production quality.

These and further objects which will be apparent to the expert of the art are attained by a system in accordance with the accompanying claims.

The present invention will be more apparent from the accompanying drawings, which are provided by way of non-limiting example and in which:
Figure 1 is a section through a part of a system according to the invention;
Figure 2 shows a variant of the system part of Figure 1;
Figure 3 is a front view of a preferred embodiment of a system according to the invention, with certain parts omitted for greater clarity, shown during a stage of its use;
Figure 4 is a view similar to Figure 4, but showing the system in a different stage of its use;
Figures 5A-5D show various positions of the system during that stage of its use shown in Figure 3;
Figures 6A-6D show various positions of the system during that stage of its use shown in Figure 4.

With reference to said figures, these show a system 1 for forming products from elastomeric material by injecting said material (for example rubber) in plastic form into suitable impressions, followed by consolidation by thermal treatment (for example vulcanization). In the figures, corresponding parts are indicated by the same reference numerals.

Specifically, the system 1 comprises a fixed structure presenting two blocks or shoulders 2 disposed spaced apart to define an operative region for the system 3 in which a feed chamber or buffer unit 4 and platens 5 are present, at least when used. The buffer unit 4 contains the elastomeric material prior to its injection into impressions (not shown) in at least one platen 5 (or mould, two shown in the figures). At least one platen 5 is supported by an element 9 movable along guides 6 supported by the shoulders 2, said movement being obtained in any known manner, for example by hydraulic, pneumatic or hydropneumatic actuators. Each platen 5 comprises two elements 7, 8 movable relative to each other, between which there is present at least one impression of the product which is to be formed from elastomeric material. Each impression is connected to a usual seat or recess 5H present in a face 5K of the platen 5, via a corresponding conduit through which the material from the buffer unit 4 passes when this is coupled to the platen.

The elements are maintained coupled together during injection of the elastomeric material into the platen 5, but are separated after solidification of the injected material, as described hereinafter. Movement between the two elements 7, 8 is obtained by the aforesaid actuators, when suitably coupled to said elements.

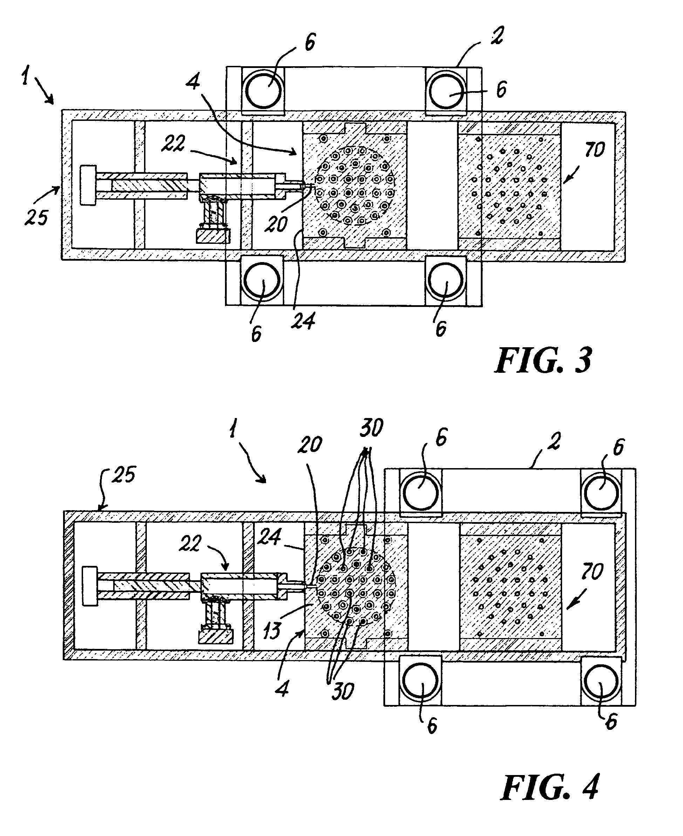

The buffer unit 4 comprises a parallelepiped body 10 defined by two plate-like components 11 and 12. The body 10 has a thickness smaller than the cross-dimension defined by two opposing flat surfaces 13 and 14; it presents an internal chamber 15 for containing the elastomeric material in a plastic state obtained in known manner by heating it. The chamber 15 is present between the components 11 and 12 and is defined by recesses 17, 18 provided respectively in surfaces 11A and 12A of these components when resting one on the other. This chamber is connected (see Figures 3 and 4) to a conduit 20 opening into a side 24 of the buffer unit 4 and connected to a device 22 for charging the elastomeric material into said chamber 15. Said device is of known type and will not be further described; preferably however, said device 22 is positioned on that side 24 of the body 10 perpendicular to said surfaces 13 and 14 and is supported by a support frame 25 also carrying the buffer unit 4 and movable within a plane perpendicular to said guides 6, laterally to the system 1, and within a plane parallel to said guides. This movement takes place along guides, not shown, by the action of a hydraulic, pneumatic or hydropneumatic actuator of known type (also not shown).

According to an important characteristic of the invention, the buffer unit 4 supports at least one nozzle 30 (or a plurality of nozzles in Figures 3 and 4), for injecting the elastomeric material into the platen 5 when this is in contact with the buffer unit 4 and the nozzle cooperates with the corresponding surface seat 5H of platen 5 connected to the relative impression. The nozzle 30 is associated with a corresponding flat surface 13 or 14, from which it projects and is movable relative thereto.

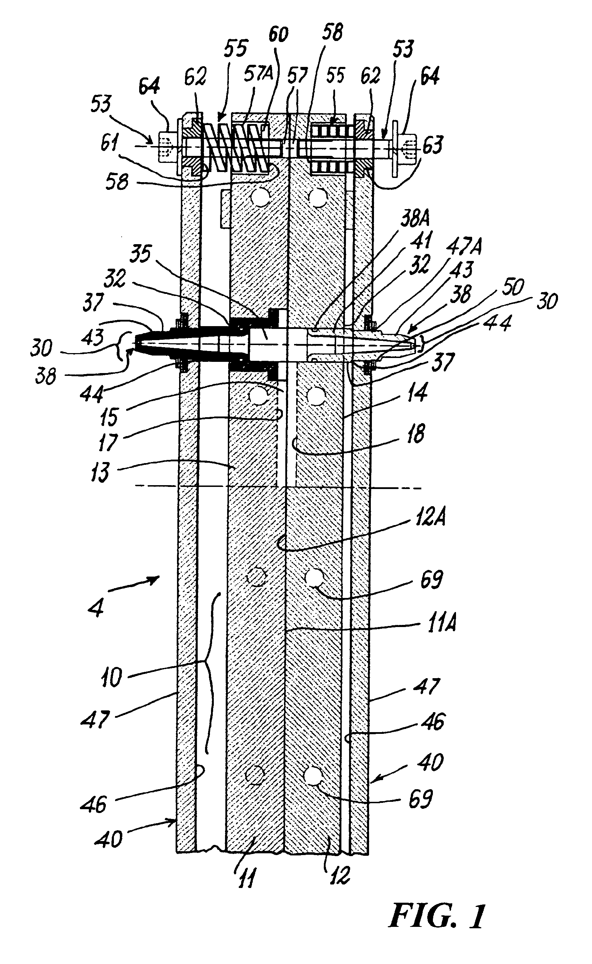

Specifically, each nozzle 30 is inserted into a corresponding seat 32 provided in the surface 13 or 14 of the buffer unit 4. This seat is defined by a through hole provided in said surface and communicating with the chamber 15 inside the buffer unit 4. The nozzle 30 can be freely inserted into said seat 32 (as in the case of the nozzle associated with the component 12 of the buffer unit 4 and projecting from the surface 14 shown in Figure 1) or can be inserted into a respective bush 35 positioned within said seat. In either case said nozzle can move within the corresponding seat such as to be able to enter it freely, but not to completely emerge from said seat. This can be achieved for example by providing a limit stop on said surfaces to cooperate with collars or surface discontinuities provided on an outer surface 37 of the body 38 of each nozzle; alternatively and preferably, said body is of stepped formation and is rigid with a plate-like member 40 positioned in front of the surface 13 or 14 and movable relative thereto, said plate-like member limiting the amount by which the nozzle emerges from its seat in the buffer unit 4. This movement is caused by the entry of the elastomeric material into the chamber 15 of the buffer unit 4 or by the movement of the plate-like member if the nozzle is fixed to it and follows its movements; this latter solution ensures that each nozzle emerges from the corresponding seat 32 by the movement of the plate-like member relative to the buffer unit, as described hereinafter.

Specifically, the body 38 of each nozzle presents a first cylindrical part 41 inserted into the seat 32 or bush 35 and at least a second part 43 connected to the first via a surface step 44 provided on the body 38 at the plate-like member 40.

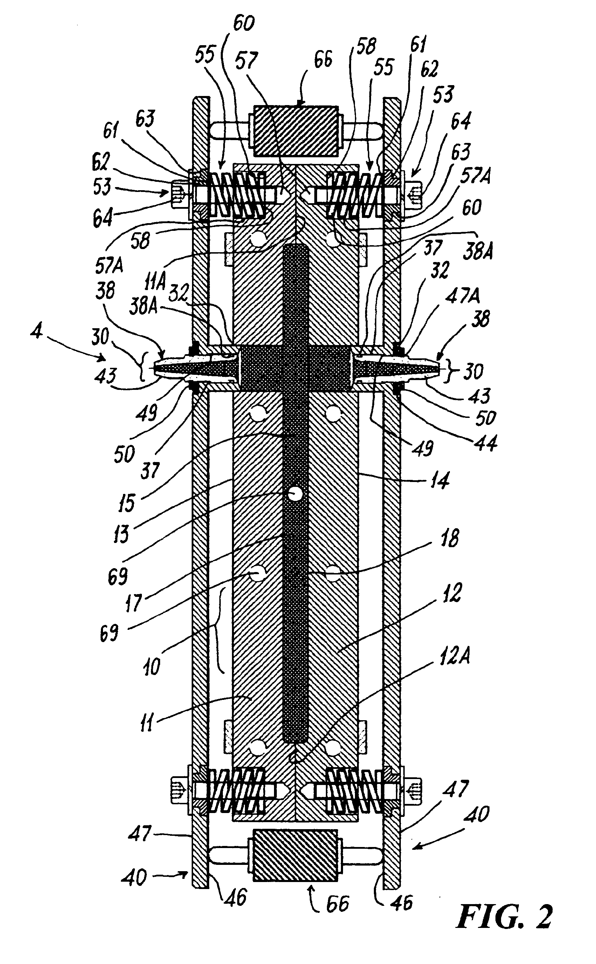

In the embodiment of Figure 1, the step 44 rests on that face 46 of the plate-like member 40 facing the surface 13 or 14 of the buffer unit 4 which faces it and opposes the face 47 from which the nozzle 30 projects from a hole 47A therein. In this embodiment, the bush 35 is inserted, fixed, into said seat 32. In contrast, in the embodiment of Figure 2, the step 44 rests on a step 49 within the bush 35 and rigid with the plate-like member 40, the nozzle 30 being able to move within this bush. In both cases, the nozzle can freely enter the seat 32 of the corresponding component 11 or 12 of the buffer unit 4.

At the face 47 of the plate-like member 40, each nozzle projects from the hole 47A, about which a sealing element 50 is positioned. It will also be noted that the body 38 of each nozzle presents an annular recess 38A within its part 41; this recess collects any elastomeric material during injection, which on solidifying forms a sort of further seal element about said body.

The plate-like member 40 is directly connected to that component of the buffer unit 4 which faces it by a limited movement connection, i.e. by connection elements which enable it to approach the adjacent surface 13 or 14, but only by a limited extent. For this purpose, end pins 53 connect each plate-like member to the buffer unit 4, with compression springs 55 (or equivalent elastic bodies) being mounted about said pins, interposed between said member and the adjacent surface 13 or 14 of the buffer unit 4. Each pin 53 is partly threaded and is screwed into a seat 57 provided in the buffer unit 4, said seat presenting a widened section 57A, on one end 58 of which there rests a first end 60 of the spring 55, the second end 61 thereof resting on a bush 62 inserted into a through hole 63 provided in the member 40 and containing the end part of the pin 53, the head 64 of which lies on the face 47 of said body 40.

In order to be certain that the plate-like member 40 is detached from the buffer unit 4 (and hence be certain that each nozzle has emerged from the relative seat 32 in the buffer unit), a separator element 66 (mechanical, hydraulic, pneumatic) can be positioned between the members 40 to bring these members to their maximum distance apart, limited by the length of the pins 53.

Finally, the buffer unit 4 comprises conduits 69 for its cooling.

The system 1 also comprises a temperature-controlled plate 70 of parallelepiped shape similar to that of the buffer unit 4, to subject to thermal treatment the material injected into each impression in the platen 5 by coupling at least one heated member 73 thereof, projecting from each of its flat surfaces facing a corresponding platen 5, to the surface seat 5H present in said platen for receiving the corresponding nozzle 30.

According to a characteristic of the present invention, the temperature-controlled plate 70 is advantageously supported by the aforedescribed frame 25 and is positioned to the side of the buffer unit 4. By virtue of this characteristic, when said plate 70 cooperates with each platen 5, the buffer unit 4 is external to the system 1 and can receive the elastomeric material to be injected into the impressions of each platen 5 when inserted into the operative region 3 subsequent to thermal treatment (vulcanization) of the previously injected material and its separation from said platen 5. The charging region for this material can hence be provided on one side of the system 1, so limiting the dimensions of this latter.

This characteristic is enabled by the fact that each nozzle 30 is movable relative to the buffer unit 4, which limits the injection pressure for the material into each platen 5 and dispenses with the need for large-dimension pressers at the shoulders 3.

It will now be assumed that articles are to be produced by injecting elastomeric material into each platen 5. To be able to proceed, this material is firstly fed into the buffer unit 4; as this latter is associated with the frame 25, the material is charged external to the region 3 of the system.

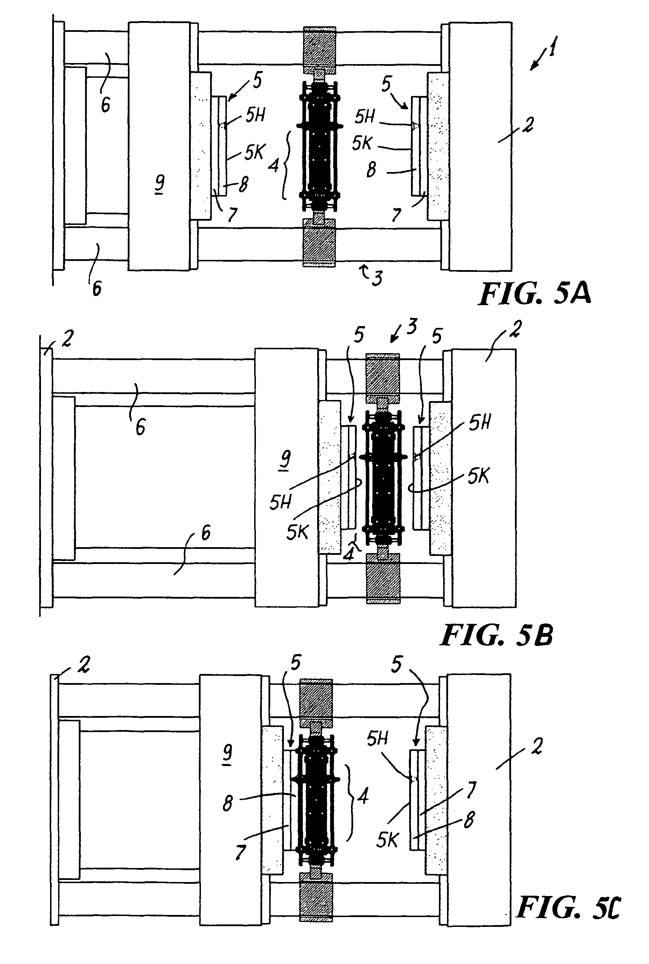

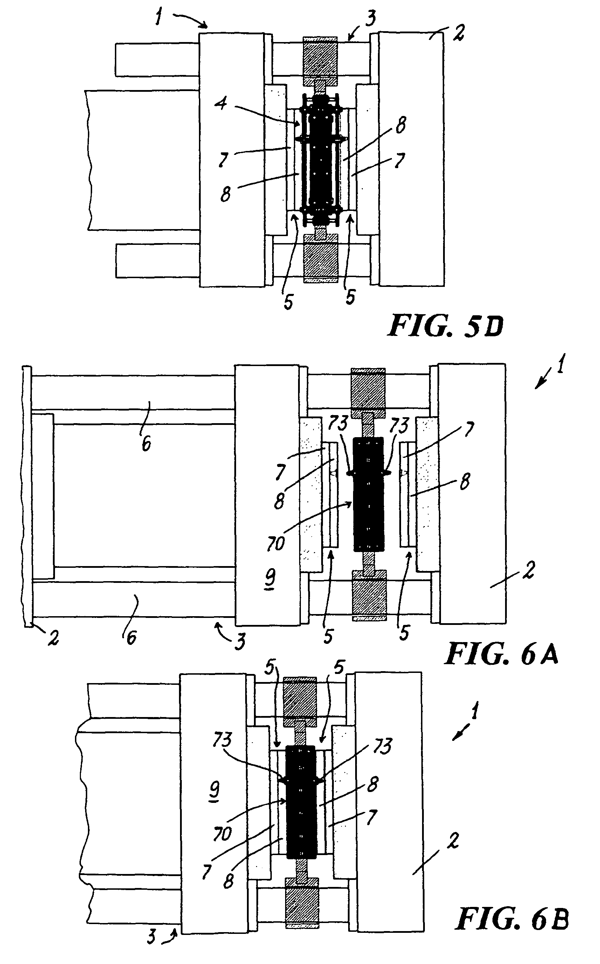

After charging, the buffer unit 4 is disposed in front of each platen 5 present in the region 3 of the system. As the buffer unit 4 is associated with the frame 25, two consecutive moulding operations can be performed by disposing the buffer unit 4 between two platens 5, as shown in Figures 5A-5D.

On inserting the buffer unit 4 into the system, the platens 5 are brought into contact with the surfaces 13 and 14 of the buffer unit or with the faces 47 of the plate-like members 40, if present (as in the example of the figs). As a result, each nozzle 30 engages the respective seat 5H of the corresponding platen 5: during this action, as a result of the movement of the platen 5 towards the buffer unit 4, the nozzle retracts into the seat 32 of the buffer unit 4, pressurizing the thermoplastic material present in the cavity 15 thereof with which the seat 32 communicates. In this manner the elastomeric material (in the plastic state) is forced into the nozzle 30, this material then being fed into the seat in the platen 5. From there, the material passes into the corresponding impression in said platen.

By virtue of the fact that the elastomeric material is forced into the nozzle by the movement of this latter within its own seat towards the interior cavity of the buffer unit 4, a pressure is exerted on said material which is small, but sufficient to enable said movement. It is therefore not necessary to exert a high pressure on the entire material present in the cavity 15, hence the presser means used in known moulds are unnecessary.

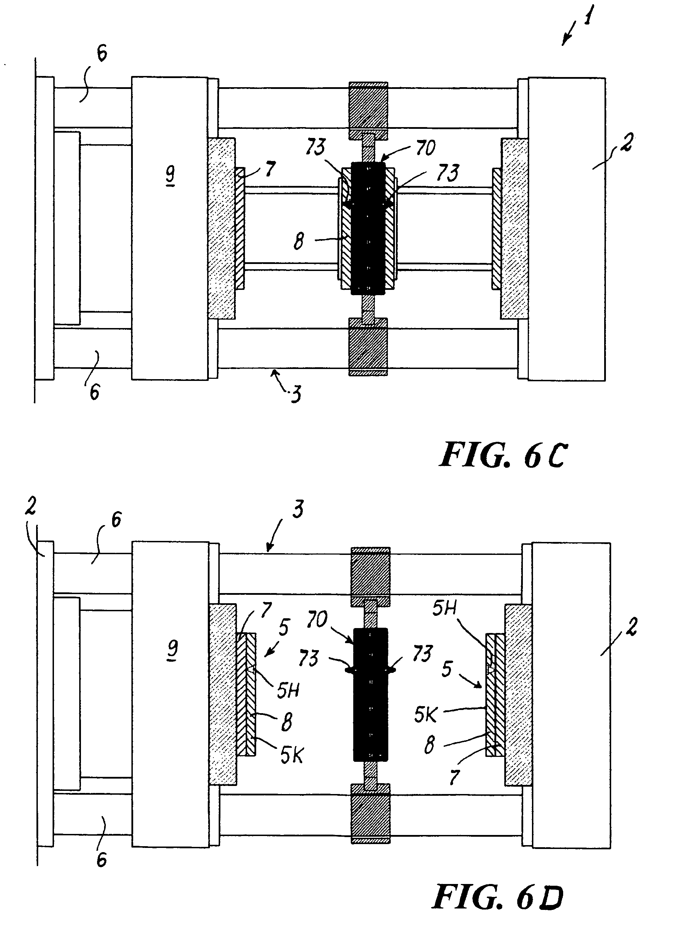

On termination of injection, the buffer unit 4 is extracted from the system and its place is taken by the temperature-controlled plate 70 (Figures 6A-6D).

At this point the platens 5 are closed onto said plate 70 and the material injected into them is vulcanized. Simultaneously, the buffer unit 4 is recharged. After vulcanization, the elements 7, 8 of each platen 5 are separated and the article present within the impressions is recovered.

By virtue of the invention, an elastomeric material can be injected with lower pressure than in the case of known moulds. The system of the invention is of small dimensions while still enabling reliable production. If the buffer unit is associated with the frame which also laterally supports the temperature-controlled plate, production downtimes are avoided because the injected product can be vulcanized while charging the buffer unit.

A particular embodiment of the invention has been described; others are however possible, such as one in which the buffer unit and the temperature-controlled plate are not associated with the movable frame, while still remaining within the scope of the invention as defined by the accompanying claims.

## Claims

1. A system (1) for forming products from an elastomeric material such as rubber or the like, comprising a buffer unit or feed chamber (4) having a body (10) comprising two opposing surfaces (13, 14), which receives said material from a charging member or tank, and presents at least one nozzle (30) projecting from at least one of said surfaces (13, 14), to enable said material in plastic form to be transferred to a platen (5) disposed in front of said at least one surface and presenting at least one impression corresponding to the product to be obtained, presser means being provided to bring said buffer unit (4) into contact with said platen (5) and enable said nozzle (30) to engage, within the platen (5), a surface seat (5H) connected to said impression such as to enable elastomeric material to be transferred into this latter and obtain the final product after solidification, the nozzle (30) being movable relative to that surface (13, 14) of the buffer unit (4) from which it projects, **characterised in that** the nozzle (30) is freely movable within a seat (32) provided in the interior of the buffer unit (4) and connected to an inner chamber (15) of this latter which contains the elastomeric material, whereby the nozzle (30) is retractable into said seat as a result of a movement of the platen (5) towards the buffer unit (4).

2. A system as claimed in claim 1, **characterised in that** the nozzle (30) is movable within a bush (35) inserted into said seat (32) of the buffer unit (4).

3. A system as claimed in claim 1, **characterised in that** the nozzle (30) is associated with a plate-like member (40) positioned in front of that surface (13, 14) of the buffer unit (4) from which said nozzle projects, said plate-like member presenting a through hole (47A) from which said nozzle projects and being secured to said buffer unit (4).

4. A system as claimed in claim 3, **characterised in that** the nozzle (30) is fixed to the plate-like member (40).

5. A system as claimed in claims 2 and 3, **characterised in that** the bush (35) is rigid with the plate-like member (40).

6. A system as claimed in claim 3, **characterised in that** said plate-like member (40) is secured to the buffer unit (4) by elastically opposed connection means of limited movement, enabling movement relative to said buffer unit.

7. A system as claimed in claim 6, **characterised in that** the connection means comprise end pins (53) fixed to the buffer unit (4) and on each of which an elastically compressible member (55) is mounted interposed between said buffer unit (4) and a face (46) of the plate-like member (40) facing said buffer unit (4), said end pins (53) being secured to said plate-like member (40).

8. A system as claimed in claim 7, **characterised in that** each elastically compressible member (55) is partially inserted into a widened section (57A) of a seat (57) for the corresponding end pin (53) provided in the buffer unit (4), said member (55) presenting an end (60) resting against the base (58) of said widened section.

9. A system as claimed in claim 3, **characterised in that** a plate-like member (40) is present at each surface (13, 14) of the buffer unit (4).

10. A system as claimed in claim 9, **characterised in that** at least one separator member (66) is disposed between said plate-like members (40), to bring said members to their maximum distance apart as limited by the end pins (53).

11. A system as claimed in claim 1, **characterised in that** the nozzle comprises a body (38) presenting a step-shaped outer surface (37).

12. A system as claimed in claims 4 and 11, **characterised in that** at least one surface step (44) on the body (38) of the nozzle (30) cooperates with the plate-like member (40), said cooperation defining a limit stop for the movement of the nozzle (30) in emerging from its seat (32) in the buffer unit (4).

13. A system as claimed in claim 11, **characterised in that** the body (38) of the nozzle (30) presents an annular surface recess (38A) in a part (41) thereof inserted into the seat (32) in the buffer unit (4), said recess collecting the elastomeric material present in the inner chamber (15) of the buffer unit (4) when, forced into the nozzle by the movement of said nozzle towards said chamber, it seeps between the nozzle and the corresponding seat (32).

14. A system as claimed in claim 1, **characterised in that** said buffer unit comprises two plate-like members (11, 12) defining the inner chamber (15) of said buffer unit (4).

15. A system as claimed in claim 1, **characterised in that** the buffer unit (4) comprises conduits (69) for its cooling.

16. A system as claimed in claim 1, **characterised in that** the buffer unit (4) is supported by a support frame (25) disposed perpendicular to an axis perpendicular to the impression-containing platen (5).

17. A system as claimed in claim 16, **characterised in that** the support frame (25) also carries a temperature-controlled plate (70) arranged to act on the elastomeric material injected into the impression in the platen (5) in order to subject it to thermal treatment and to solidify it.

18. A system as claimed in claim 17, **characterised in that** the temperature-controlled plate (70) is positioned to the side of the buffer unit (4) on the support frame (25), this latter being movable transversely to the axis perpendicular to the impression-containing platen (5), in order to position said temperature-controlled plate and said buffer unit in front of said platen (5) alternately.

19. A system as claimed in claim 18, **characterised in that** the support frame (25) is also movable along the axis perpendicular to the impression-containing platen (5).

20. A system as claimed in claim 1, **characterised by** comprising an impression-containing platen (5) disposed in front of each of its opposing surfaces (13, 14).

## Patentansprüche

1. Ein System (1) zum Formen von Produkten aus einem elastomeren Material wie beispielsweise Gummi oder dergleichen, umfassend eine Puffereinheit oder Zuführkammer (4) mit einem Körper (10), umfassend zwei gegenüberliegende Oberflächen (13, 14), welcher besagtes Material von einem Befüllelement oder Tank erhält und zumindest eine Düse (30) aufweist, die von zumindest einer der besagten Oberflächen (13, 14) herausragt um zu ermöglichen, dass besagtes Material in plastischer Form auf eine Trägerplatte (5) überführt wird, welche vor besagter zumindest einer Oberfläche angeordnet ist und zumindest eine Vertiefung aufweist korrespondierend zu dem Produkt, welches erhalten werden soll, Drückemittel, die vorgesehen sind, um besagte Puffereinheit (4) in Kontakt mit besagter Trägerplatte (5) zu bringen und um mit besagter Düse (30) innerhalb der Trägerplatte (5) in einen Oberflächensitz (5H) einzugreifen, der mit besagter Vertiefung verbunden ist, um es dem elastomeren Material zu ermöglichen, in Letztere überführt zu werden und das Endprodukt nach Verfestigung zu erhalten, wobei die Düse (30) relativ zu dieser Oberfläche (13, 14) der Puffereinheit (4) bewegbar ist, von der sie hervorragt,
**dadurch gekennzeichnet,**
**dass** die Düse (30) frei innerhalb eines Sitzes (32) bewegbar ist, der im Inneren der Puffereinheit (4) vorgesehen ist und der mit einer inneren Kammer (15) von Letzterem verbunden ist, enthaltend das elastomere Material, wobei die Düse (30) in besagten Sitz einziehbar ist, als Ergebnis einer Bewegung der Trägerplatte (5) in Richtung der Puffereinheit (4).

2. System nach Anspruch 1,
**dadurch gekennzeichnet,**
**dass** die Düse (30) beweglich innerhalb einer Hülse (35) angeordnet ist, welche in besagten Sitz (32) der Puffereinheit (4) eingeführt ist.

3. System nach Anspruch 1,
**dadurch gekennzeichnet,**
**dass** die Düse (30) mit einem plattenähnlichen Element (40) verbunden ist, welches vor der Oberfläche (13, 14) der Puffereinheit (4) angeordnet ist, von der besagte Düse hervorragt, wobei besagtes plattenähnliches Element eine Durchgangsbohrung (47A) aufweist, von der die besagte Düse hervorragt, und an der besagten Puffereinheit (4) befestigt ist.

4. System nach Anspruch 3,
**dadurch gekennzeichnet,**
**dass** die Düse (30) an dem plattenähnlichen Element (40) befestigt ist.

5. System nach den Ansprüchen 2 und 3,
**dadurch gekennzeichnet,**
**dass** die Hülse (35) starr gegenüber dem plattenähnlichen Element (40) angeordnet ist.

6. System nach Anspruch 3,
**dadurch gekennzeichnet,**
**dass** besagtes plattenähnliches Element (40) an der Puffereinheit (4) befestigt ist durch elastische gegenüberliegende Verbindungsmittel von beschränkter Beweglichkeit, die eine Bewegung relativ zu besagter Puffereinheit ermöglichen.

7. System nach Anspruch 6,
**dadurch gekennzeichnet,**
**dass** die Verbindungsmittel Anschlagbolzen (53) umfassen, welche an der Puffereinheit (4) befestigt sind und wobei an jedem von ihnen ein elastisch zusammendrückbares Element (55) befestigt ist, welches zwischen besagter Puffereinheit (4) und einer Fläche (46) des plattenähnlichen Elementes (40) zwischengeschaltet ist und besagter Puffereinheit (4) gegenüberliegt, wobei besagte Anschlagbolzen (53) an besagtem plattenähnlichen Element (40) befestigt sind.

8. System nach Anspruch 7,
**dadurch gekennzeichnet,**
**dass** jedes elastisch zusammendrückbare Element (55) teilweise eingeführt ist in einen sich verbreiternden Abschnitt (57A) einer Aufnahme (57) für den entsprechenden Anschlagbolzen (53), welcher in der Puffereinheit (4) vorgesehen ist, wobei besagtes Element (55) ein Ende (60) aufweist, welches an der Basis (58) des besagten sich verbreiternden Abschnittes anliegt.

9. System nach Anspruch 3,
**dadurch gekennzeichnet,**
**dass** ein plattenähnliches Element (40) an jeder Oberfläche (13, 14) der Puffereinheit (4) vorhanden ist.

10. System nach Anspruch 9,
**dadurch gekennzeichnet,**
**dass** zumindest ein Trennungselement (66) zwischen den besagten plattenähnlichen Elementen (40) angeordnet ist, um besagte Elemente in ihre maximale Entfernung voneinander zu bringen, die durch die Anschlagbolzen (53) beschränkt ist.

11. System nach Anspruch 1,
**dadurch gekennzeichnet,**
**dass** die Düse einen Körper (38) umfasst, der eine stufenförmige äußere Oberfläche (37) aufweist.

12. System gemäß den Ansprüchen 4 und 11,
**dadurch gekennzeichnet,**
**dass** zumindest eine Oberflächenstufe (44) auf dem Körper (38) der Düse (30) mit dem plattenähnlichen Element (40) zusammenwirkt, wobei besagtes Zusammenwirken eine Begrenzung für die Bewegung der Düse (30) beim Hervortreten aus ihrem Sitz (32) in der Puffereinheit (4) bestimmt.

13. System nach Anspruch 11,
**dadurch gekennzeichnet,**
**dass** der Körper (38) der Düse (30) eine ringförmige Oberflächenaussparung (38A) in einem Teil (41) aufweist, der in den Sitz (32) in der Puffereinheit (4) eingeführt ist, wobei besagte Aussparung das elastomere Material aufnimmt, welches in der inneren Kammer (15) der Puffereinheit (4) vorhanden ist, wenn dieses zwischen die Düse und den korrespondierenden Sitz (32) sickert, wenn dieses in die Düse durch die Bewegung der besagten Düse in Richtung besagter Kammer gedrückt wird.

14. System nach Anspruch 1,
**dadurch gekennzeichnet,**
**dass** besagte Puffereinheit zwei plattenähnliche Elemente (11, 12) umfasst, welche die innere Kammer (15) der besagten Puffereinheit (4) festlegen.

15. System nach Anspruch 1,
**dadurch gekennzeichnet,**
**dass** die Puffereinheit (4) Leitungen (69) für ihre Kühlung umfasst.

16. System nach Anspruch 1,
**dadurch gekennzeichnet,**
**dass** die Puffereinheit (4) durch einen Halterahmen (25) gehalten wird, welcher senkrecht zu einer Achse, welche senkrecht zu der die Vertiefung aufweisende Trägerplatte (5) verläuft, angeordnet ist.

17. System nach Anspruch 16,
**dadurch gekennzeichnet,**
**dass** der Halterahmen (25) ebenfalls eine temperaturgesteuerte Platte (70) trägt, welche angeordnet ist, um auf das elastomere Material, welches in die Vertiefung der Trägerplatte (5) eingeführt wird, einzuwirken, um es einer thermischen Behandlung zu unterziehen und es zu verfestigen.

18. System nach Anspruch 17,
**dadurch gekennzeichnet,**
**dass** die temperaturgesteuerte Platte (70) auf der Seite der Puffereinheit (4) auf dem Halterahmen (25) angeordnet ist, wobei letzterer transversal zu der Achse senkrecht zu der die Vertiefung aufweisenden Trägerplatte (5) bewegbar ist, um besagte temperaturgesteuerte Platte und besagte Puffereinheit vor besagter Trägerplatte (5) abwechselnd anzuordnen.

19. System nach Anspruch 18,
**dadurch gekennzeichnet,**
**dass** der Halterahmen (25) ebenfalls entlang der Achse senkrecht zu der die Vertiefung aufweisenden Trägerplatte (5) bewegbar ist.

20. System nach Anspruch 1,
**gekennzeichnet,**
**durch** ein Umfassen einer eine Vertiefung aufweisenden Trägerplatte (5) welche vor jeder ihrer gegenüberliegenden Oberfläche (13, 14) angeordnet ist.

## Revendications

1. Système (1) pour former des produits à partir d'un matériau élastomère tel que du caoutchouc ou similaire, comprenant une unité tampon ou chambre d'alimentation (4) ayant un corps (10) comprenant deux surfaces opposées (13, 14) qui reçoit ledit matériau à partir d'un réservoir ou élément de chargement et présente au moins une buse (30) faisant saillie d'au moins l'une desdites surfaces (13, 14) pour permettre audit matériau sous forme plastique d'être transféré sur un plateau (5) disposé en face de ladite au moins une surface et présentant au moins une empreinte correspondant au produit à obtenir, des moyens presseurs étant prévus pour amener ladite unité tampon (4) en contact avec ledit plateau (5) et permettre à ladite buse (30) de mettre en prise, à l'intérieur du plateau (5), un siège de surface (5H) raccordé à ladite empreinte afin de permettre audit matériau élastomère d'être transféré dans cette dernière et obtenir le produit final après solidification, la buse (30) étant mobile par rapport à cette surface (13, 14) de l'unité tampon (4) à partir de laquelle elle fait saillie, **caractérisé en ce que** la buse (30) est librement mobile à l'intérieur d'un siège (32) prévu dans l'intérieur de l'unité tampon (4) et raccordée à une chambre interne (15) de cette dernière qui contient le matériau élastomère, moyennant quoi la buse (30) est rétractable dans ledit siège suite à un mouvement du plateau (5) vers l'unité tampon (4).

2. Système selon la revendication 1, **caractérisé en ce que** la buse (30) est mobile à l'intérieur d'une douille (35) insérée dans ledit siège (32) de l'unité tampon (4).

3. Système selon la revendication 1, **caractérisé en ce que** la buse (30) est associée à un élément en forme de plaque (40) positionné en face de cette surface (13, 14) de l'unité tampon (4) à partir de laquelle ladite buse fait saillie, ledit élément en forme de plaque présentant un trou de passage (47A) à partir duquel ladite buse fait saillie et étant fixée sur ladite unité tampon (4).

4. Système selon la revendication 3, **caractérisé en ce que** la buse (30) est fixée sur l'élément en forme de plaque (40).

5. Système selon les revendications 2 et 3, **caractérisé en ce que** la douille (35) est rigide avec l'élément en forme de plaque (40).

6. Système selon la revendication 3, **caractérisé en ce que** ledit élément en forme de plaque (40) est fixé sur l'unité tampon (4) par des moyens de raccordement élastiquement opposés de mouvement limité, permettant le mouvement par rapport à ladite unité tampon.

7. Système selon la revendication 6, **caractérisé en ce que** les moyens de raccordement comprennent des broches d'extrémité (53) fixées sur l'unité tampon (4) et sur chacune desquelles un élément élastiquement compressible (55) est monté en étant interposé entre ladite unité tampon (4) et une face (46) de l'élément en forme de plaque (40) faisant face à ladite unité tampon (4), lesdites broches d'extrémité (53) étant fixées sur ledit élément en forme de plaque (40).

8. Système selon la revendication 7, **caractérisé en ce que** chaque élément élastiquement compressible (55) est partiellement inséré dans une section élargie (57A) d'un siège (57) pour la broche d'extrémité (53) correspondante prévue dans l'unité tampon (4), ledit élément (55) présentant une extrémité (60) reposant contre la base (58) de ladite section élargie.

9. Système selon la revendication 3, **caractérisé en ce qu'**un élément en forme de plaque (40) est présent sur chaque surface (13, 14) de l'unité tampon (4).

10. Système selon la revendication 9, **caractérisé en ce qu'**au moins un élément séparateur (66) est disposé entre lesdits éléments en forme de plaque (40), pour amener lesdits éléments à leur distance maximum telle que limitée par les broches d'extrémité (53).

11. Système selon la revendication 1, **caractérisé en ce que** la buse comprend un corps (38) présentant une surface externe en forme de marche (37).

12. Système selon les revendications 4 et 11, **caractérisé en ce qu'**au moins une marche de surface (44) sur le corps (38) de la buse (30) coopère avec l'élément en forme de plaque (40), ladite coopération définissant une butée de limite pour le mouvement de la buse (30) en sortant de son siège (32) dans l'unité tampon (4).

13. Système selon la revendication 11, **caractérisé en ce que** le corps (38) de la buse (30) présente un évidement de surface annulaire (38A) dans sa partie (41) insérée dans le siège (32) dans l'unité de tampon (4), ledit évidement collectant le matériau élastomère présent dans la chambre interne (15) de l'unité de tampon (4) lorsque, forcé dans la buse par le mouvement de ladite buse vers ladite chambre, il s'infiltre entre la buse et le siège (32) correspondant.

14. Système selon la revendication 1, **caractérisé en ce que** ladite unité tampon comprend deux éléments en forme de plaque (11, 12) définissant la chambre interne (15) de ladite unité tampon (4).

15. Système selon la revendication 1, **caractérisé en ce que** l'unité tampon (4) comprend des conduits (69) pour son refroidissement.

16. Système selon la revendication 1, **caractérisé en ce que** l'unité tampon (4) est supportée par un châssis de support (25) disposé perpendiculairement à un axe perpendiculaire au plateau (5) contenant l'empreinte.

17. Système selon la revendication 16, **caractérisé en ce que** le châssis de support (25) supporte également une plaque contrôlée en température (70) agencée pour agir sur l'élément élastomère injecté dans l'empreinte dans le plateau (5) afin de le soumettre au traitement thermique et le solidifier.

18. Système selon la revendication 17, **caractérisé en ce que** la plaque contrôlée en température (70) est positionnée sur le côté de l'unité tampon (4) sur le châssis de support (25), ce dernier étant mobile de manière transversale par rapport à l'axe perpendiculaire au plateau (5) contenant l'empreinte, afin de positionner ladite plaque contrôlée en température et ladite unité tampon en face dudit plateau (5) de manière alternée.

19. Système selon la revendication 18, **caractérisé en ce que** le châssis de support (25) est également mobile le long de l'axe perpendiculaire au plateau (5) contenant l'empreinte.

20. Système selon la revendication 1, **caractérisé en ce qu'**il comprend un plateau (5) contenant l'empreinte disposé en face de chacune de ses surfaces opposées (13, 14).
